# EUROPÄISCHE PATENTANMELDUNG

(11) **EP 2 784 038 A1**
(43) Veröffentlichungstag der Anmeldung: **01.10.2014**
(21) Anmeldenummer: 13161138.6
(22) Anmeldetag: 26.03.2013
(51) Int. Cl.: C04B 28/02, C04B 40/00, C04B 28/16

(54) **Fließmittel auf Zuschlägen**

(71) Anmelder: BASF SE, 67056 Ludwigshafen (DE)
(72) Erfinder: Bichler, Manfred, 84549 Engelsberg (DE); Schinabeck, Michael, 83352 Altenmarkt (DE); Gädt, Torben, 83278 Traunstein (DE)
(74) Vertreter: Gastner, Thomas

(57) **Zusammenfassung**

Die Erfindung betrifft eine Zusammensetzung umfassend 1 bis 70 Gew.-% mindestens eines Copolymers, welches erhältlich ist durch Polymerisation einer Mischung von Monomeren, umfassend (I) mindestens ein ethylenisch ungesättigtes Monomer, welches mindestens einen Rest aus der Reihe Carbonsäure, Carbonsäuresalz, Carbonsäureester, Carbonsäureamid, Carbonsäureanhydrid und Carbonsäureimid umfasst und (II) mindestens ein ethylenisch ungesättigtes Monomer mit einem Polyalkylenoxid-Rest, 0,01 bis 10 Gew.-% mindestens eines Emulgators und 30 bis 98 Gew.-% mindestens eines bei 20 °C flüssigen Kohlenwasserstoffs oder eines Kohlenwasserstoffgemischs. Weiterhin wird ein Verfahren zur Herstellung der Zusammensetzung sowie eine pulverförmige Mischung, umfassend die erfindungsgemäße Zusammensetzung, offenbart.

## Beschreibung

Die Erfindung betrifft eine Zusammensetzung umfassend ein Copolymer, einen Emulgator sowie einen bei 20 °C flüssigen Kohlenwasserstoff oder ein Kohlenwasserstoffgemisch. Weiterhin wird ein Verfahren zur Herstellung der Zusammensetzung sowie deren Verwendung in einer pulverförmigen Mischung, insbesondere einem Werktrockenmörtel, offenbart.

Um eine verbesserte Verarbeitbarkeit, d. h. Knetbarkeit, Streichfähigkeit, Spritzbarkeit, Pumpbarkeit oder Fließfähigkeit, anorganischer Feststoffsuspensionen zu erreichen, werden diesen oft Zusatzmittel in Form von Dispergier- oder Fließmitteln zugesetzt. Derartige anorganische Feststoffe umfassen in der Bauindustrie meistens anorganische Bindemittel wie z.B. Zement auf Basis Portlandzement (EN 197), Zement mit besonderen Eigenschaften (DIN 1164), Weißzement, Calciumaluminatzement bzw. Tonerdezement (EN 14647), Calciumsulfoaluminatzement, Spezialzemente, Calciumsulfat-n-Hydrat (n=0 bis 2), Kalk bzw. Baukalk (EN 459) sowie Puzzolane bzw. latent hydraulische Bindemittel wie z. B. Flugasche, Metakaolin, Silicastaub, Hüttensand. Weiterhin enthalten die anorganischen Feststoffsuspensionen in der Regel Füllstoffe, insbesondere Gesteinskörnung bestehend aus z. B. Calciumcarbonat, Quarz oder anderen natürlichen Gesteinen verschiedener Korngröße und Kornform sowie weitere anorganische und/oder organische Additive (Zusatzmittel) zur gezielten Beeinflussung von Eigenschaften bauchemischer Produkte z. B. Hydratationskinetik, Rheologie oder Luftgehalt. Außerdem können organische Bindemittel wie z. B. Latexpulver enthalten sein.

Um Baustoffmischungen, insbesondere auf Basis von anorganischen Bindemitteln in eine gebrauchsfertige, verarbeitbare Form zu überführen, ist in der Regel wesentlich mehr Anmachwasser erforderlich, als für den nachfolgenden Hydratations- bzw. Erhärtungsprozess notwendig wäre. Der durch das überschüssige, später verdunstende Wasser gebildete Hohlraumanteil im Baukörper führt zu einer signifikant verschlechterten mechanischen Festigkeit, Beständigkeit und Dauerhaftigkeit.

Um diesen überschüssigen Wasseranteil bei einer vorgegebenen Verarbeitungskonsistenz zu reduzieren und/oder die Verarbeitbarkeit bei einem vorgegebenen Wasser/Bindemittel-Verhältnis zu verbessern, werden Zusatzmittel eingesetzt, die im allgemeinen in der Bauchemie als Wasserreduktions- oder Fließmittel bezeichnet werden. Als derartige Mittel sind vor allem Polykondensationsprodukte auf Basis von Naphthalin- oder Alkylnaphthalinsulfonsäuren bzw. Sulfonsäuregruppen enthaltende Melamin-Formaldehydharze bekannt.

DE 3530258 beschreibt die Verwendung von wasserlöslichen Natriumnaphthalinsulfonsäure-Formaldehydkondensaten als Zusatzmittel für anorganische Bindemittel und Baustoffe. Diese Zusatzmittel werden zur Verbesserung der Fließfähigkeit der Bindemittel wie z. B. Zement, Anhydrit oder Gips sowie den damit hergestellten Baustoffen beschrieben.

DE 2948698 beschreibt hydraulische Mörtel für Estriche, die Fließmittel auf Basis von Melamin-Formaldehyd-Kondensationsprodukten und/oder sulfonierte Formaldehyd-Naphthalinkondensate und/oder Ligninsulfonat und als Binder Portlandzement, tonhaltiger Kalkmergel, Ton- und Schwachbrandklinker enthalten.

Neben den rein anionischen Fließmitteln, die im wesentlichen Carbonsäure- und Sulfonsäuregruppen enthalten, werden als neuere Gruppe von Fließmitteln schwach anionische Kammpolymere beschrieben, die üblicherweise anionische Ladungen an der Hauptkette tragen und nichtionische Polyalkylenoxidseitenketten enthalten.

WO 01/96007 beschreibt diese schwach anionischen Fließ- und Mahlhilfsmittel für wässrige Mineralsuspensionen, die durch radikalische Polymerisation von Vinylgruppen enthaltenden Monomeren hergestellt werden und die als eine Hauptkomponente Polyalkylenoxidgruppen enthalten.

DE 19513126 und DE 19834173 beschreiben Copolymere auf Basis von ungesättigten Dicarbonsäurederivaten und Oxyalkylenglykol-Alkenylethern und deren Verwendung als Zusatzmittel für hydraulische Bindemittel, insbesondere Zement.

Ziel der Zugabe von Fließmitteln in der Bauindustrie ist entweder die Plastizität des Bindemittelsystems zu erhöhen oder die benötigte Wassermenge bei gleichen Verarbeitungsbedingungen zu reduzieren.

Es hat sich gezeigt, dass Fließmittel auf Basis von Ligninsulfonat, Melaminsulfonat und Polynaphthalinsulfonat den schwach anionischen, polyalkylenoxidhaltigen Copolymeren in ihrer Wirksamkeit deutlich unterlegen sind. Diese Copolymere werden auch als Polycarboxylatether (PCE) bezeichnet. Polycarboxylatether dispergieren die anorganischen Partikel nicht nur über elektrostatische Aufladung aufgrund der an der Hauptkette enthaltenen anionischen Gruppen (Carboxylatgruppen, Sulfonatgruppen), sondern stabilisieren zusätzlich die dispergierten Teilchen durch sterische Effekte aufgrund der Polyalkylenoxid-Seitenketten, die durch Absorption von Wassermolekülen eine stabilisierende Schutzschicht um die Partikel bilden.

Dadurch kann entweder die benötige Menge Wasser für das Einstellen einer bestimmten Konsistenz gegenüber den klassischen Fließmitteln reduziert werden oder aber die Plastizität der feuchten Baustoffmischung wird durch die Zugabe der Polycarboxylatether so weit reduziert, dass selbstverdichtender Beton oder selbstverdichtender Mörtel bei niedrigen Wasser/Zement-Verhältnissen hergestellt werden kann. Auch ermöglicht die Verwendung der Polycarboxylatether die Herstellung von Transportbeton oder Transportmörtel, der über längere Zeiträume pumpbar bleibt oder die Herstellung von hochfesten Betonen oder hochfesten Mörteln durch die Einstellung eines niedrigen Wasser/Zement-Verhältnisses.

Neben den beschriebenen Polycarboxylatethern sind inzwischen auch eine Reihe von Derivaten mit modifiziertem Wirkungsprofil bekannt. So beschreibt beispielsweise die US 2009312460 Polycarboxylatester, wobei die Esterfunktion nach Einbringen in eine zementäre, wässrige Mischung hydrolysiert wird und hierdurch ein Polycarboxylatether gebildet wird. Polycarboxylatester haben den Vorteil, dass sie ihre Wirkung erst nach einiger Zeit in der zementären Mischung entfalten und hierdurch die dispergierende Wirkung über einen längeren Zeitraum aufrechterhalten werden kann.

Dispergiermittel auf Basis von Polycarboxylatethern und deren Derivate werden entweder als Feststoff in Pulverform oder als wässrige Lösung angeboten. Pulverförmige Polycarboxylatether können beispielsweise einem Werktrockenmörtel bei dessen Herstellung zugemischt werden. Beim anmachen des Werktrockenmörtels mit Wasser lösen sich die Polycarboxylatether und können nachfolgend ihre Wirkung entfalten.

Alternativ ist es auch möglich, Polycarboxylatether oder deren Derivate der anorganischen Feststoffsuspension in gelöster Form zuzusetzen. Insbesondere kann das Dispergiermittel direkt in das Anmachwasser dosiert werden.

Alle bisher bekannten Verfahren Fließmittel in eine anorganische Feststoffsuspension einzubringen haben jedoch den Nachteil, dass die dispergierende Wirkung sich nicht unmittelbar nach Zugabe des Anmachwassers entfaltet. Unabhängig davon ob das Dispergiermittel als Pulver oder in wässriger Lösung zugesetzt wird, kann es beispielsweise bei einem Trockenmörtel -je nach Wasser zu Zement Verhältnis (w/z Wert) bzw. Wasseranspruch - über 100 Sekunden dauern, bis man nach Zugabe des Anmachwassers unter starkem Rühren eine homogene Suspension erhält. Dies ist insbesondere bei der Verwendung von Mischpumpen problematisch.

Aufgabe der vorliegenden Erfindung war es demzufolge, pulverförmige Mischungen, welche insbesondere ein anorganisches Bindemittel umfassen, zur Verfügung zu stellen, die sich schneller mit Wasser homogen dispergieren lassen, als dies mit den bisher bekannten Zusammensetzungen möglich war.

Gelöst wurde diese Aufgabe durch eine Zusammensetzung umfassend 1 bis 70 Gew.-%, bevorzugt 20 bis 50 Gew.-% mindestens eines Copolymers, welches erhältlich ist durch Polymerisation einer Mischung von Monomeren, umfassend (I) mindestens ein ethylenisch ungesättigtes Monomer, welches mindestens einen Rest aus der Reihe Carbonsäure, Carbonsäuresalz, Carbonsäureester, Carbonsäureamid, Carbonsäureanhydrid und Carbonsäureimid umfasst und (II) mindestens ein ethylenisch ungesättigtes Monomer mit einem Polyalkylenoxid-Rest, 0,01 bis 10 Gew.-%, bevorzugt 1 bis 3 Gew.-% mindestens eines Emulgators und 29 bis 98 Gew.-%, bevorzugt 50 bis 80 Gew.-% mindestens eines bei 20 °C flüssigen Kohlenwasserstoffs oder eines Kohlenwasserstoffgemischs.

Überraschend hat sich hierbei ergeben, dass nicht nur die gestellte Aufgabe in vollem Umfang gelöst werden konnte, sondern dass eine pulverförmige Mischung, welche insbesondere ein anorganisches Bindemittel umfassen kann, nach Zugabe der erfindungsgemäßen Zusammensetzung neben der hervorragenden Dispergierbarkeit gleichzeitig ausgezeichnete Verarbeitungseigenschaften aufweist. Insbesondere konnte eine deutliche Reduzierung der Staubbildung bei der Handhabung der pulverförmigen Zusammensetzung beobachtet werden. Weiterhin überraschend war, dass die Lagerfähigkeit der erfindungsgemäßen pulverförmigen Zusammensetzung durch die flüssige Komponente nicht oder nicht wesentlich verschlechtert wurde. Bevorzugt handelt es sich bei dem erfindungsgemäßen mindestens einen bei 20 °C flüssigen Kohlenwasserstoff oder Kohlenwasserstoffgemisch um mindestens einen aliphatischen Kohlenwasserstoff oder ein Kohlenwasserstoffgemisch, insbesondere lineare oder verzweigte, vorzugsweise lineare, gesättigte oder ungesättigte, vorzugsweise mindestens einen gesättigten aliphatischen Kohlenwasserstoff oder ein Kohlenwasserstoffgemisch, vorzugsweise mit Siedepunkten oder Siedebereichen von 100 bis 400 °C, insbesondere 150 bis 350 °C, vorzugsweise 200 bis 300 °C, bezogen auf Atmosphärendruck.

Die bevorzugt eingesetzten aliphatischen Kohlenwasserstoffe oder Kohlenwasserstoffgemische können jedoch gewisse aromatische Anteile, insbesondere aromatische Kohlenwasserstoffe, enthalten; dies ist insbesondere dann der Fall, wenn technische Kohlenwasserstoffe oder Kohlenwasserstoffgemische zur Anwendung kommen, z. B. technische Mineralöle, die oftmals aromatische Anteile enthalten. In einem solchen Fall sollte der Aromatenanteil, bezogen auf die eingesetzten Gesamtkohlenwasserstoffe oder Gesamtkohlenwasserstoffgemische, vorteilhafterweise 30 Gew.-%, vorzugsweise 20 Gew.-%, bevorzugt 17,5 Gew.-%, besonders bevorzugt 15 Gew.-%, nicht überschreiten.

Wenn die aliphatischen Kohlenwasserstoffe oder Kohlenwasserstoffgemische mit den vorgenannten Eigenschaften, insbesondere mit den vorgenannten Siedepunkten und Siedebereichen, auch aromatische Anteile z. B. aromatische Kohlenwasserstoffe enthalten, sollten deren Siedepunkte oder Siedebereiche vorteilhafterweise oberhalb von 100 °C, insbesondere oberhalb von 150 °C, vorzugsweise oberhalb von 200 °C, liegen. Dies hat den Vorteil, dass derartige aromatische Kohlenwasserstoffe im Allgemeinen nicht flüchtig sind, so dass die behandelten pulverförmigen Mischungen umfassend ein anorganisches Bindemittel geruchsfrei bzw. geruchsarm sind. Zum anderen wird hierdurch sichergestellt, dass die Verarbeitungs- und Anwendungseigenschaften der auf diese Weise behandelten pulverförmigen Mischungen umfassend ein anorganisches Bindemittel nicht bzw. nicht nennenswert beeinträchtigt werden.

In einer besonders bevorzugten Ausführungsform der vorliegenden Erfindung handelt es sich bei dem mindestens einen bei 20 °C flüssigen Kohlenwasserstoff oder Kohlenwasserstoffgemisch um mindestens einen Kohlenwasserstoff oder ein Kohlenwasserstoffgemisch mit mehr als 10 Kohlenstoffatomen, insbesondere mehr als 15 Kohlenstoffatomen, vorzugsweise mehr als 20 Kohlenstoffatomen und/oder es sich bei dem mindestens einen bei 20 °C flüssigen Kohlenwasserstoff oder Kohlenwasserstoffgemisch um mindestens einen Kohlenwasserstoff oder ein Kohlenwasserstoffgemisch mit einer Kohlenstoffanzahl zwischen 10 und 100, vorzugsweise zwischen 10 und 40, bevorzugt zwischen 15 und 30 und/oder es sich bei dem mindestens einen bei 20 °C flüssigen Kohlenwasserstoff oder Kohlenwasserstoffgemisch um mindestens einen Kohlenwasserstoff oder ein Kohlenwasserstoffgemisch mit einer gewichtsmittleren Molekularmasse von 100 bis 4.000 g/mol, insbesondere 100 bis 2.000 g/mol, vorzugsweise 150 bis 1.000 g/mol, besonders bevorzugt 200 bis 750 g/mol, ganz besonders bevorzugt 250 bis 500 g/mol.

Es ist weiterhin als bevorzugt anzusehen, dass die eingesetzten Kohlenwasserstoffe oder Kohlenwasserstoffgemische eine kinematische Viskosität (ISO 3014 bzw. DIN 51 562/T1) bei 20 °C im Bereich von 30 bis 150 mm²/s, insbesondere 30 bis 100 mm²/s, besitzen und/oder dass die Kohlenwasserstoffe oder Kohlenwasserstoffgemische eine kinematische Viskosität (ISO 3014 bzw. DIN 51 562/T1) bei 40 °C im Bereich von 10 bis 100 mm²/s, insbesondere 15 bis 50 mm²/s, besitzen und/oder dass die Kohlenwasserstoffe oder Kohlenwasserstoffgemische eine kinematische Viskosität (ISO 3014 bzw. DIN 51 562/T1) bei 100 °C im Bereich von 1 bis 10 mm²/s besitzen.

Erfindungsgemäß bevorzugt weisen die eingesetzte Kohlenwasserstoffe oder Kohlenwasserstoffgemische Dichten im Bereich von 800 bis 900 kg/m³, insbesondere 825 bis 875 kg/m³, auf. Weiterhin bevorzugt ist es, wenn der erfindungsgemäß eingesetzte bei 20 °C flüssige Kohlenwasserstoff oder das Kohlenwasserstoffgemisch bei einer Temperatur von 107°C einen Verdampfungsverlust über 24 Stunden von weniger als 5 Gew.-%, vorzugsweise von weniger als 2 Gew.-%, besonders bevorzugt von weniger als 1 Gew.-%, bezogen auf die Kohlenwasserstoffe oder Kohlenwasserstoffgemische, aufweisen. Auf diese Weise wird gewährleistet, dass die erfindungsgemäße pulverförmige Mischung umfassend ein anorganisches Bindemittel zumindest im wesentlichen geruchsfrei bzw. geruchsarm sind, da keine Kohlenwasserstoffe oder Kohlenwasserstoffgemische in nennenswerten Mengen freigesetzt werden.

Die Copolymere entsprechend der vorliegenden Erfindung enthalten mindestens zwei Monomerbausteine. Es kann aber auch vorteilhaft sein, Copolymere mit drei oder mehr Monomerbausteinen zu verwenden.

In einer bevorzugten Ausführungsform wird das ethylenisch ungesättigte Monomer (I) durch mindestens eine der folgenden allgemeinen Formeln aus der Gruppe (Ia), (Ib) und (Ic) repräsentiert:

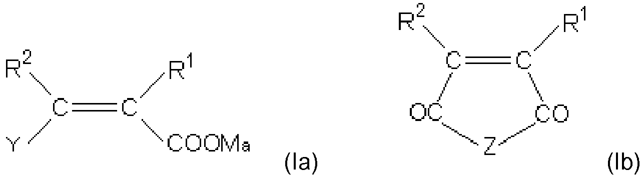

Bei dem Mono- oder Dicarbonsäure-Derivat (Ia) und dem in cyclischer Form vorliegenden Monomer (Ib), wobei Z = O (Säureanhydrid) oder NR² (Säureimid) darstellen, steht R¹ und R² unabhängig voneinander für Wasserstoff oder einen aliphatischen Kohlenwasserstoffrest mit 1 bis 20 C-Atomen, vorzugsweise eine Methylgruppe. Y bedeutet H, -COOMₐ, -CO-O(C_{q}H_{2q}O)ᵣ-R³, -CO-NH-(C_{q}H_{2q}O)ᵣ-R³.

M bedeutet Wasserstoff, ein ein- oder zweiwertiges Metallkation, vorzugsweise Natrium-, Kalium-, Calcium- oder Magnesium-Ion, weiterhin Ammonium oder ein organischer Aminrest sowie a = ½ oder 1, je nachdem, ob es sich bei M um ein ein- oder zweiwertiges Kation handelt. Als organische Aminreste werden vorzugsweise substituierte Ammonium-Gruppen eingesetzt, die sich ableiten von primären, sekundären oder tertiären C₁₋₂₀-Alkylaminen, C₁₋₂₀-Alkanolaminen, C₅₋₈-Cycloalkylaminen und C₆₋₁₄-Arylaminen. Beispiele für die entsprechenden Amine sind Methylamin, Dimethylamin, Trimethylamin, Ethanolamin, Diethanolamin, Triethanolamin, Methyldiethanolamin, Cyclohexylamin, Dicyclohexylamin, Phenylamin, Diphenylamin in der protonierten (Ammonium)Form.

R³ bedeutet Wasserstoff, ein aliphatischer Kohlenwasserstoffrest mit 1 bis 20 C-Atomen, ein cycloaliphatischer Kohlenwasserstoffrest mit 5 bis 8 C-Atomen, ein Arylrest mit 6 bis 14 C-Atomen, der ggf. noch substituiert sein kann, q = 2 , 3 oder 4 sowie r = 0 bis 200, vorzugsweise 1 bis 150. Die aliphatischen Kohlenwasserstoffe können hierbei linear oder verzweigt sowie gesättigt oder ungesättigt sein. Als bevorzugte Cycloalkylreste sind Cyclopentyl- oder Cyclohexylreste, als bevorzugte Arylreste Phenyl- oder Naphthylreste anzusehen, die insbesondere noch durch Hydroxyl-, Carboxyl- oder Sulfonsäuregruppen substituiert sein können.

Die folgende Formel stellt das Monomer (Ic) dar:

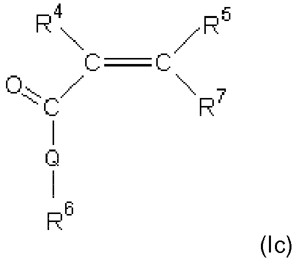

Hierbei steht R⁴ und R⁵ unabhängig voneinander für Wasserstoff oder einen aliphatischen Kohlenwasserstoffrest mit 1 bis 20 C-Atomen, einen cycloaliphatischen Kohlenwasserstoffrest mit 5 bis 8 C-Atomen, einen ggf. substituierten Arylrest mit 6 bis 14 C-Atomen. Q kann gleich oder verschieden sein und wird durch NH, NR³ oder O repräsentiert, wobei R³ die oben genannte Bedeutung besitzt.

Weiterhin ist R⁶ gleich oder verschieden und wird durch (CₙH₂ₙ)-SO₃H mit n = 0, 1, 2, 3 oder 4, (CₙH₂ₙ)-OH mit n = 0, 1, 2, 3 oder 4; (CₙH₂ₙ)-PO₃H₂ mit n = 0, 1, 2, 3 oder 4, (CₙH₂ₙ)-OPO₃H₂ mit n= 0, 1, 2, 3 oder 4, (C₆H₄)-SO₃H, (C₆H₄)-PO₃H₂, (C₆H₄)-OPO₃H₂ und (CₙH₂ₙ)-NR⁸_{b} mit n = 0, 1, 2, 3 oder 4 und b = 2 oder 3 repräsentiert.

R⁷ bedeutet H, -COOMₐ, -CO-O(C_{q}H_{2q}O)ᵣ-R³, -CO-NH-(C_{q}H_{2q}O)ᵣ-R³, wobei Mₐ, R³, q und r die oben genannte Bedeutungen besitzen.

R⁸ steht für Wasserstoff, einen aliphatischen Kohlenwasserstoffrest mit 1 bis 10 C-Atomen, einen cycloaliphatischen Kohlenwasserstoffrest mit 5 bis 8 C-Atomen, ein ggf. substituierter Arylrest mit 6 bis 14 C-Atomen.

Weiterhin bevorzugt im Sinne der vorliegenden Erfindung wird das ethylenisch ungesättigte Monomer (II) durch folgende allgemeine Formeln repräsentiert: 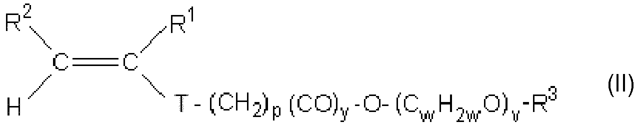 wobei p für eine ganze Zahl zwischen 0 und 6 steht, y für 0 oder 1, v für eine ganze Zahl zwischen 3 und 250 und w unabhängig voneinander für jede (C_{w}H_{2w}O)-Einheit gleich oder verschieden für eine ganze Zahl zwischen 2 und 18 sowie T für Sauerstoff oder eine chemische Bindung. R¹, R² und R³ besitzen die oben genannte Bedeutung.

In einer bevorzugten Ausführungsform stehen in der allgemeine Formeln (II) p für eine ganze Zahl zwischen 0 und 4, v für eine ganze Zahl zwischen 5 und 250 und w unabhängig voneinander für jede (C_{w}H_{2w}O)-Einheit gleich oder verschieden für 2 oder 3.

In einer besonders bevorzugten Ausführungsform stehen in der allgemeinen Formeln (II) p für 4, v für eine ganze Zahl zwischen 10 und 120 und w unabhängig voneinander für jede (C_{w}H_{2w}O)-Einheit gleich oder verschieden für 2 oder 3, T für Sauerstoff und y für 0. Hierbei ist es besonders bevorzugt, wenn zumindest ein Teilbereich durch ein statistisches Ethylenoxid/Propylenoxid-Copolymer gebildet wird und der molare Anteil an Propylenoxid-Einheiten bevorzugt 10 bis 30 mol-%, bezogen auf die Summe der Ethylenoxid- und Propylenoxid-Einheiten des statistischen Ethylenoxid/Propylenoxid-Copolymers oder des entsprechenden Teilbereichs beträgt.

Insbesondere kann es sich bei dem mindestens einen ethylenisch ungesättigten Monomer mit einem Polyalkylenoxid-Rest (II) um eine Verbindung der Formel (III) handeln. Der Block A besteht aus einer Polyethylenoxid-Einheit, wobei n bevorzugt eine Zahl von 20 bis 30 repräsentiert. Der Block B besteht aus einer statistischen Ethylenoxid/Propylenoxid-Copolymer-Einheit, wobei k bevorzugt eine Zahl von 5 bis 10 und I bevorzugt eine Zahl von 20 bis 35 repräsentiert.

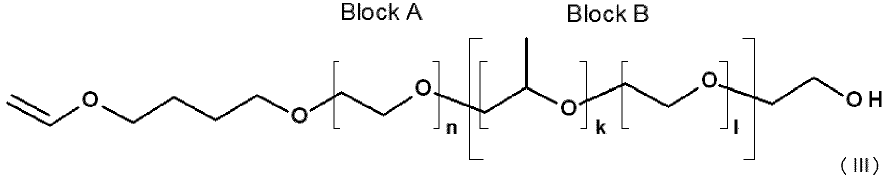

In einer weiterhin bevorzugten Ausführungsform der Erfindung handelt es sich bei dem ethylenisch ungesättigte Monomer (II) um mindestens eine Verbindung der allgemeinen Formeln (IV), (V), (VI) und (VII), wobei 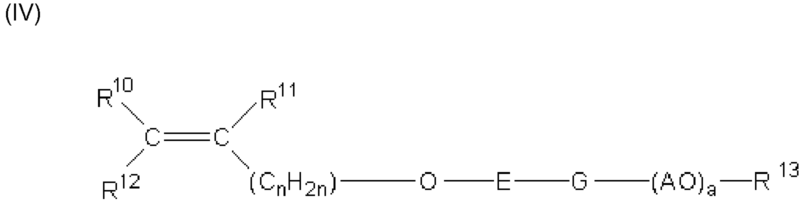 mit
R¹⁰, R¹¹ sowie R¹² jeweils gleich oder verschieden und unabhängig voneinander repräsentiert durch H und/oder eine unverzweigte oder verzweigte C₁ - C₄ Alkylgruppe, bevorzugt H und/oder CH₃;
E gleich oder verschieden sowie repräsentiert durch eine unverzweigte oder verzweigte C₁ - C₆ Alkylengruppe, insbesondere C₁, C₂, C₃, C₄, C₅ oder C₆ zwar jeweils typisch, jedoch bevorzugt C₂ und C₄, eine Cyclohexylgruppe, CH₂-C₆H₁₀, ortho, meta oder para substituiert vorliegendes C₆H₄ und/oder eine nicht vorhandene Einheit, d.h., dass E nicht vorhanden ist;
G gleich oder verschieden sowie repräsentiert durch O, NH und/oder CO-NH mit der Maßgabe, dass falls E eine nicht vorhandene Einheit ist, G auch als eine nicht vorhandene Einheit vorliegt, d.h., dass G nicht vorhanden ist;
A gleich oder verschieden sowie repräsentiert durch CₓH₂ₓ mit x = 2, 3, 4 und/oder 5 bevorzugt x = 2 und/oder CH₂CH(C₆H₅);
n gleich oder verschieden sowie repräsentiert durch 0, 1, 2, 3, 4 und/oder 5;
a gleich oder verschieden sowie repräsentiert durch eine ganze Zahl von 2 bis 350, bevorzugt 10 - 200;
R¹³ gleich oder verschieden sowie repräsentiert durch H, eine unverzweigte oder verzweigte C₁ - C₄ Alkylgruppe, CO-NH₂, und/oder COCH₃, bevorzugt H, CH₃; 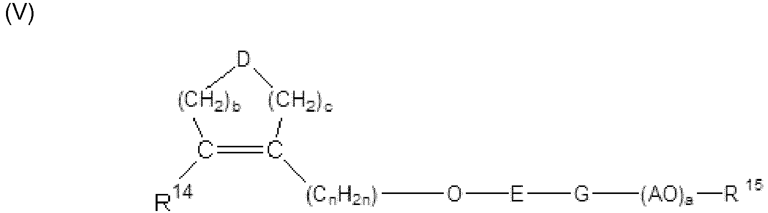 mit
R¹⁴ gleich oder verschieden sowie repräsentiert durch H und/oder eine unverzweigte oder verzweigte C₁ - C₄ Alkylgruppe, bevorzugt H;
E gleich oder verschieden sowie repräsentiert durch eine unverzweigte oder verzweigte C₁ - C₆ Alkylengruppe, bevorzugt C₂H₄, eine Cyclohexylgruppe, CH₂-C₆H₁₀, ortho, meta oder para substituiert vorliegendes C₆H₄ und/oder durch eine nichtvorhandene Einheit, d.h. E ist nicht vorhanden;
G gleich oder verschieden sowie repräsentiert durch eine nicht vorhandene Einheit, O, NH und/oder CO-NH mit der Maßgabe, dass falls E eine nicht vorhandene Einheit ist, G auch als eine nicht vorhandene Einheit, d.h. G ist nicht vorhanden, vorliegt;
A gleich oder verschieden sowie repräsentiert durch CₓH₂ₓ mit x = 2, 3, 4 und/oder 5, bevorzugt x = 2 und/oder CH₂CH(C₆H₅);
n gleich oder verschieden sowie repräsentiert durch 0, 1, 2, 3, 4 und/oder 5;
a gleich oder verschieden sowie repräsentiert durch eine ganze Zahl von 2 bis 350, bevorzugt 10 - 200;
D gleich oder verschieden sowie repräsentiert durch eine nicht vorhandene Einheit, d.h. D ist nicht vorhanden, NH und/oder O, mit der Maßgabe, dass falls D eine nicht vorhandene Einheit ist: b = 0, 1, 2, 3 oder 4 sowie c = 0, 1, 2, 3 oder 4, wobei b + c = 3 oder 4, und
mit der Maßgabe dass wenn D NH und/oder O ist: b = 0, 1, 2 oder 3, c = 0, 1, 2 oder 3, wobei b + c = 2 oder 3;
R¹⁵ gleich oder verschieden sowie repräsentiert durch H, eine unverzweigte oder verzweigte C₁ - C₄ Alkylgruppe, CO-NH₂, und/oder COCH₃, bevorzugt H; 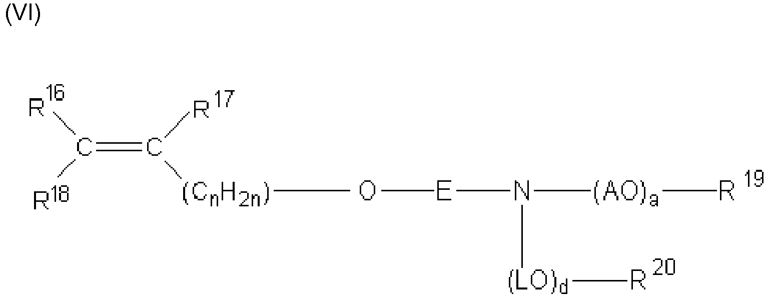 mit
R¹⁶, R¹⁷ sowie R¹⁸ jeweils gleich oder verschieden und unabhängig voneinander repräsentiert durch H und/oder eine unverzweigte oder verzweigte C₁ - C₄ Alkylgruppe, bevorzugt H und/oder CH₃;
E gleich oder verschieden sowie repräsentiert durch eine unverzweigte oder verzweigte C₁ - C₆ Alkylengruppe, bevorzugt C₂H₄ oder C₄H₈, eine Cyclohexylgruppe, CH₂-C₆H₁₀, ortho, meta oder para substituiert vorliegendes C₆H₄ und/oder durch eine nicht vorhandene Einheit, d.h. E ist nicht vorhanden;
A gleich oder verschieden sowie repräsentiert durch CₓH₂ₓ mit x = 2, 3, 4 und/oder 5, bevorzugt x = 2 und/oder CH₂CH(C₆H₅);
n gleich oder verschieden sowie repräsentiert durch 0, 1, 2, 3, 4 und/oder 5;
L gleich oder verschieden sowie repräsentiert durch CₓH₂ₓ mit x = 2, 3, 4 und/oder 5, bevorzugt x = 2 und/oder CH₂-CH(C₆-H₅);
a gleich oder verschieden sowie repräsentiert durch eine ganze Zahl von 2 bis 350, bevorzugt 10 - 200;
d gleich oder verschieden sowie repräsentiert durch eine ganze Zahl von 1 bis 350, bevorzugt 10 - 200;
R¹⁹ gleich oder verschieden sowie repräsentiert durch H und/oder eine unverzweigte oder verzweigte C₁ - C₄ Alkylgruppe, bevorzugt H,
R²⁰ gleich oder verschieden sowie repräsentiert durch H und/oder eine unverzweigte C₁ - C₄ Alkylgruppe, bevorzugt H. 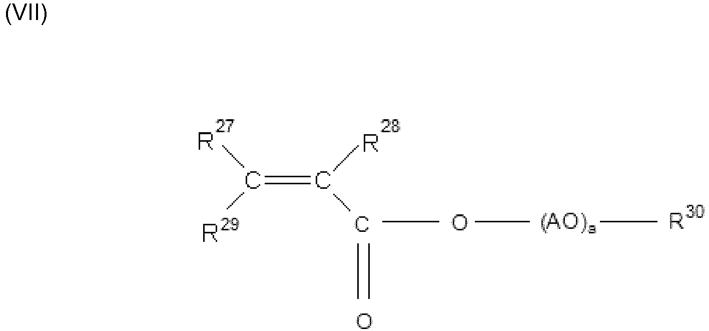 worin
R²⁷, R²⁸ und R²⁹ gleich oder verschieden sind und unabhängig voneinander für H stehen und/oder einen unverzweigten oder verzweigten C₁ - C₄ verzweigten Alkylgruppenrest stehen;
A sind gleich oder verschieden und bedeuten CₓH₂ₓ mit x = 2, 3, 4 und/oder 5 und/oder CH₂CH(C₆H₅);
a sind gleich oder verschieden und stehen für eine ganze Zahl zwischen 2 und 350;
R³⁰ sind gleich oder verschieden und stehen für H und/oder einen unverzweigten oder verzweigten C₁ -C₄ Alkylrest.

Allgemein kann gesagt werden, dass die Poly-Alkoxyseitenketten (AO)ₐ der Polyethermakromonomere besonders bevorzugt reine Poly-Ethoxyseitenketten sind, wobei jedoch weiterhin bevorzugt auch gemischte Poly-Alkoxyseitenketten, insbesondere solche, die sowohl Propoxy- als auch Ethoxy-Gruppen enthalten, vorliegen können.

In der Praxis wird häufig als Polyethermakromonomer alkoxyliertes Isoprenol, also alkoxyliertes 3-Methyl-3-buten-1-ol und/oder alkoxylierter Hydroxybutylvinylether und/oder alkoxylierter (Meth)allylalkohol, wobei Allylalkohol bevorzugt gegenüber Methallylalkohol ist, mit normalerweise jeweils einer arithmetisch mittleren Zahl an Oxyalkylengruppen von 4 bis 350 eingesetzt. Besonders bevorzugt ist alkoxylierter Hydroxybutylvinylether.

Neben dem Monomeren (I) und (II) können noch weitere Monomertypen in dem erfindungsgemäßen Copolymer zum Einsatz kommen.

Der molare Anteil der Monomere (I) und (II) in dem erfindungsgemäßen Copolymer kann in weiten Bereichen frei gewählt werden. Als besonders vorteilhaft hat es sich erwiesen, wenn der Anteil des Monomeren (I) an dem Copolymer 5 bis 90 Mol-%, bevorzugt 30 bis 85 Mol-% und insbesondere 55 bis 80 Mol-% beträgt. In einer weiterhin bevorzugten Ausführungsform beträgt der Anteil des Monomeren (II) an dem Copolymer 10 bis 95 Mol-%, insbesondere 15 bis 70 Mol-% und besonders bevorzugt 20 bis 45 Mol-%.

In einer weiterhin bevorzugten Ausführungsform können als erfindungsgemäße Copolymere auch solche mit Amid- und Estergruppen eingesetzt werden, welche herstellbar sind durch Umsetzung von Homo- oder Copolymeren von (Meth)acrylsäure mit einer Monohydroxy-Verbindung bei einer Temperatur bis 200 °C, so dass neben Estergruppen Anhydridgruppen entstehen, wobei in einem folgenden Schritt die gebildeten Anhydridgruppen mit einer Monoamin-Verbindung bei Temperaturen unter 100 °C umgesetzt werden.

Der Inhalt der EP 1 577 327 A1, der sich u.a. auf die Herstellung von Copolymeren mit Amid- und Estergruppen bezieht, wird durch Bezugnahme vollständig in die vorliegende Anmeldung einbezogen. Insbesondere sind die auf Seite 3, Zeile 27 bis Seite 8, Zeile 17 beschriebenen Verbindungen als Copolymere geeignet.

Es ist als bevorzugt anzusehen, dass das Monomer (II) ein Molekulargewicht von 500 bis 10.000 g/mol aufweist.

In einer bevorzugten Ausführungsform besitzt das erfindungsgemäße Copolymer ein Molekulargewicht von 10.000 bis 100.000 g/mol, bestimmt durch Gelpermeationschromatographie gegen Polyethylenglykol Standards.

Die erfindungsgemäße Zusammensetzung kann auch Wasser enthalten. Ein hoher Wassergehalt der flüssigen Komponente kann beim Einsatz in pulverförmigen Mischungen umfassend ein anorganisches Bindemittel zu einer Verschlechterung der Lagerfähigkeit der pulverförmigen Mischung führen. Dies ist insbesondere von dem eingesetzten anorganischen Bindemittel abhängig. Besonders bevorzugt beträgt der Wassergehalt der erfindungsgemäße Zusammensetzung deshalb < 5 Gew.-%, insbesondere < 3 Gew.-% und besonders bevorzugt weniger als 2 Gew.-%. So kann insbesondere der Einsatz von Wasserfängern in der pulverförmigen Mischung vorteilhaft sein. Wasserfänger binden dabei Wasser entweder in ihre Kristrallstruktur ein oder verbrauchen das Wasser über andere Mechanismen, bevor das Bindemittel damit reagieren kann und einen negative Beeinträchtigung der Produkteigenschaft verursacht wird. Insbesondere kann es sich um mindestens ein Molekularsieb oder schnell wasserbindende Salze, wie beispielsweise CaO handeln. Wasserfänger können zu einer höheren Wassertoleranz der erfindungsgemäßen pulverförmigen Mischung führen, wobei in diesem Fall keine Verschlechterung der Lagerfähigkeit der erfindungsgemäßen pulverförmigen Zusammensetzung zu beobachten ist.

In einer bevorzugten Ausführungsform der vorliegenden Erfindung handelt es sich bei dem Emulgator um mindestens einen für Emulsionspolymerisationen geeigneten Emulgator.

In einer besonders bevorzugten Ausführungsform handelt es sich bei dem Emulgator um ein Copolymer. Insbesondere kommen amphipile Diblockcopolymere in Frage mit einem hydrophilen und einem hydrophoben Block, wobei der hydrophobe Block der schwerere Block ist. Diese sind erhältlich durch blockweise kontrollierte radikalische Polymerisation (RAFT, MADIX, ATRP etc). Besonders geeignete Beispiele sind Poly(ethylhexylacrylat-block-vinylpyrrolidon) und Poly(acrylsäure-block-butylacrylat). Besonders bevorzugt wird der Emulgator in Form einer Dispersion eingesetzt.

Der Inhalt der EP 1 889 858 B1, der sich u.a. auf diese vorstehend aufgelisteten Verbindungen und die Herstellung von Diblockcopolymeren bezieht, wird durch Bezugnahme vollständig in die vorliegende Anmeldung einbezogen. Insbesondere sind die auf Seite 4, Zeile 29 bis Seite 13, Zeile 8 beschriebenen Verbindungen als Emulgator geeignet.

Auch die in EP 0 000 424 A1 beschriebenen A-B-A Triblockcopolymerstrukturen sind als polymerer Emulgator geeignet. Dabei handelt es sich um Polyester-PEG-Polyester Strukturen. Der Inhalt der EP 0 000 424 A1, der sich u.a. auf diese vorstehend aufgelisteten Verbindungen und die Herstellung von A-B-A Triblockcopolymerstrukturen bezieht, wird durch Bezugnahme vollständig in die vorliegende Anmeldung einbezogen. Insbesondere sind die auf Seite 1, Zeile 1 bis Seite 16, Zeile 27 beschriebenen Verbindungen als Emulgator geeignet.

Ebenfalls sind Copolymere aus Ceto-Stearylmethacrylat und Methacrylat gut geeignete polymere Stabilisatoren für Wasser in Öl Suspensionen. Diese und weitere Copolymere sind unter anderem in EP 0 126 528 A1 beschrieben. Der Inhalt der EP 0 126 528 A1 wird durch Bezugnahme vollständig in die vorliegende Anmeldung einbezogen. Insbesondere sind die auf Seite 4, Zeile 25 bis Seite 23, Zeile 33 beschriebenen Verbindungen als Emulgator geeignet.

In einer besonders bevorzugten Ausführungsform handelt es sich bei den erfindungsgemäßen Emulgator um einen Emulgator auf Basis eines Copolymers umfassend wasserlösliche Monomere (A) und wasserunlösliche Monomere (B). Die entsprechenden Strukturen können blockweise angeordnet, z.B. Poly(A-block-B) oder Poly(A-block-B-block-A) oder Poly(B-block-A-block-B), oder auch statistisch verteilt sein, z.B. Poly(A-ran-B), oder auch alternierend verteilt sein, z.B. Poly(A-alt-B).

Weiterhin sind Mischungen aus polymeren Emulgatoren bzw. Stabilisatoren und Tensiden zur Stabilisierung der Wasser in Öl bzw. Polymer in Öl Dispersion geeignet. Dabei können anionische, kationische oder nicht-ionische Tenside in Kombination mit den oben genannten polymeren Emulgatoren verwendet werden.

In einer bevorzugten Ausführungsform besteht die erfindungsgemäße Zusammensetzung aus mindestens einem Copolymer, mindestens einem Emulgator und mindestens einem bei 20 °C flüssigen Kohlenwasserstoff oder Kohlenwasserstoffgemisch.

Als Lösungsmittel bei der Herstellung der erfindungsgemäßen Copolymere ist insbesondere Wasser geeignet. Es besteht aber auch die Möglichkeit ein Gemisch aus Wasser und einem organischen Lösungsmittel einzusetzen, wobei sich das Lösungsmittel bezüglich radikalischer Polymerisationsreaktionen weitestgehend inert verhalten sollte.

Die Polymerisationsreaktion erfolgt bevorzugt im Temperaturbereich zwischen 0 und 180 °C, besonders bevorzugt zwischen 10 und 100 °C, sowohl bei Normaldruck als auch unter erhöhtem oder erniedrigtem Druck. Gegebenenfalls kann die Polymerisation auch unter einer Schutzgasatmosphäre, vorzugsweise unter Stickstoff, ausgeführt werden.

Zur Auslösung der Polymerisation können energiereiche, elektromagnetische Strahlen, mechanische Energie oder chemische Polymerisationsinitiatoren wie organische Peroxide, z. B. Benzoylperoxid, tert.-Butylhydroperoxid, Methylethylketonperoxid, Cumoylperoxid, Dilauroylperoxid oder Azoinitiatoren, wie z. B. Azodiisobutyronitril, Azobisamidopropyl-hydrochlorid und 2,2'-Azobis(2-methylbutyronitril) verwendet werden. Ebenfalls geeignet sind anorganische Peroxyverbindungen, wie z. B. Ammoniumperoxodisulfat, Kaliumperoxodisulfat oder Wasserstoffperoxid, gegebenenfalls in Kombination mit Reduktionsmitteln (z. B. Natriumhydrogensulfit, Ascorbinsäure, Eisen(II)sulfat) oder Redoxsystemen, welche als reduzierende Komponente eine aliphatische oder aromatische Sulfonsäure (z. B. Benzolsulfonsäure, Toluolsulfonsäure) enthalten. Insbesondere bevorzugt handelt es sich um eine Mischung aus mindestens einer Sulfinsäure mit mindestens einem Eisen(III)-Salz und/oder um eine Mischung aus Ascorbinsäure mit mindestens einem Eisen(III)-Salz.

Als Molekulargewichtsregler kommen die üblichen Verbindungen zum Einsatz. Geeignete bekannte Regler sind z. B. Alkohole, wie Methanol, Ethanol, Propanol, Isopropanol, n-Butanol, sec.-Butanol und Amylalkohole, Aldehyde, Ketone, Alkylthiole, wie z. B. Dodecylthiol und tert.-Dodecylthiol, Thioglykolsäure, Isooctylthioglykolat, 2-Mercaptoethanol, 2-Mercaptopropionsäure, 3-Mercaptopropionsäure und einige Halogenverbindungen, wie z. B. Tetrachlorkohlenstoff, Chloroform und Methylenchlorid.

In einer alternativen weiteren Ausführungsform kann das Verfahren zur Herstellung der erfindungsgemäßen Copolymere auch in einem organischen Lösungsmittel oder in einem Gemisch mehrerer organischer Lösungsmittel durchgeführt werden.

In einer besonders bevorzugten Ausführungsform wird die Polymerisation der Monomeren (I) und (II) in einem wasserhaltigen Lösungsmittel durchgeführt, wobei der Wassergehalt der gesamten Reaktionsmischung mehr als 20 Gew.-%, bevorzugt zwischen 30 und 75 Gew.-% beträgt. Das Polymerisationsprodukt wird anschließend mit dem Emulgator und dem mindestens einen bei 20 °C flüssigen Kohlenwasserstoff oder Kohlenwasserstoffgemisch versetzt und das Wasser entfernt. Hierbei ist es besonders bevorzugt, wenn die Zusammensetzung vor dem Entfernen des Wassers mehr als 10³ W/m³ Scherleistung, insbesondere mehr als 10⁴ W/m³, besonders bevorzugt mehr als 10⁶ W/m³ eingetragen werden. Bevorzugt wird das Copolymer in dem wasserhaltigen Lösungsmittel zunächst mit dem Emulgator und dem mindestens einen bei 20 °C flüssigen Kohlenwasserstoff oder Kohlenwasserstoffgemisch gemischt, was beispielsweise mit Hilfe eines Flügelrührers geschehen kann. Anschließend erfolgt wie bereits beschrieben das Einbringen der Scherleistung, was beispielsweise mit mindestens einer Vorrichtung aus der Reihe Zahnkolloidmühle, Perlmühle, Ultraschall-Geräte, Rotor-Stator (z.B. IKA Ultra-Turrax) und Dissolver-Scheibe erfolgen kann. Die anschließende Entfernung des Wassers kann mit allen dem Fachmann hierfür bekannten Verfahren durchgeführt werden. Insbesondere haben sich Dünnschichtverdampfung oder Destillation als besonders geeignet erwiesen.

In einer weiterhin bevorzugten Ausführungsform können der erfindungsgemäßen Zusammensetzung, je nach Verwendungszweck, auch noch weitere Additive zugemischt werden. Insbesondere kann die Zusammensetzung, bezogen auf die Gesamtmischung, 0,5 bis 69 Gew.-% mindestens eines weiteren Additivs enthalten. Hierdurch kann bei der Verwendung der erfindungsgemäßen Zusammensetzung in einer pulverförmigen Mischung in einfacher Weise ein oder mehrere weitere Additiven eigebracht werden, was eine besonders wirtschaftliche Vorgehensweise darstellt und ggf. kann auch ein gesonderter Trocknungsschritt entfallen. Durch die besonders homogene Verteilung des mindestens einen weiteren Additivs kann dessen Effekt direkt nach dem Anmachen mit Wasser verbessert werden, was als weiterer Vorteil dieser Ausführungsform zu sehen ist. Bei den weiteren Additiven kann es sich insbesondere um mindestens eines aus der Reihe Verflüssiger, Entschäumer, Stabilisierungsmittel, Wasserretentionsmittel, Verdicker, Verlaufsmittel, Entstaubungsmittel und Pigmente handeln.

Ein weiterer Gegenstand der vorliegenden Erfindung ist eine pulverförmige Mischung umfassend die erfindungsgemäße Zusammensetzung. In Abhängigkeit von der konkreten Zusammensetzung kann die pulverförmige Mischung 0,01 bis 90 Gew.-%, 0,01 bis 50 Gew.-%, 0,01 bis 10 Gew.-% oder 0,05 bis 2 Gew.-% der erfindungsgemäßen Zusammensetzung, bezogen auf die Gesamtmasse der pulverförmigen Mischung, umfassen. Das in Kontakt bringen der pulverförmigen Mischungen mit der erfindungsgemäßen Zusammensetzung, kann auf jede dem Fachmann hierfür bekannte Art geschehen. Als besonders geeignet hat es sich erwiesen, wenn die erfindungsgemäße Zusammensetzung durch Aufsprühen oder Bedüsen mit dem Pulver in Kontakt gebracht wird, wobei das Verfahren bevorzugt einen Mischschritt umfasst. Auf diese Weise kann der homogene Auftrag in einfacher Weise bei gleichzeitig guter Haftung und Anfangsadhäsion gewährleistet werden. Selbstverständlich kann das in Kontakt bringen des Pulvers mit der flüssigen Komponente auch auf jede andere geeignete Art und Weise erfolgen. In Frage kommen hier insbesondere auch das Abmischen bzw. Unterrühren, wobei jedoch der Sprühauftrag eindeutig zu bevorzugen ist, da dies die einfachste und wirtschaftlich attraktivste Auftragungsvariante darstellt.

Ein weiterer Gegenstand der vorliegenden Erfindung ist die Verwendung der erfindungsgemäßen Zusammensetzung in einer pulverförmigen Mischung, zur Beschleunigung der zeitlichen Entfaltung der dispergierenden Wirkung des Copolymers nach Zugabe des Anmachwassers, wobei 0,01 bis 10 Gew.-%, insbesondere 0,05 bis 2 Gew.-% der erfindungsgemäßen Zusammensetzung, bezogen auf die Gesamtmasse, eingesetzt werden.

Hierbei ist es besonders bevorzugt, dass die pulverförmige Mischung ein anorganisches Bindemittel und/oder einen anorganischen Füllstoff umfasst. In einer speziellen Ausführungsform besteht die pulverförmigen Mischung zu mindestens 80 Gew.-%, insbesondere zu mindestens 90 Gew.-%, und besonders bevorzugt zu mehr als 95 Gew.-% aus einem anorganischen Bindemittel und/oder einem anorganischen Füllstoff. Insbesondere kann es sich bei dem anorganischen Bindemittel um mindestens eines aus der Reihe Zement auf Basis Portlandzement, Weißzement, Calciumaluminatzement, Calciumsulfoaluminatzement, Calciumsulfat-n-Hydrat oder latent hydraulisches bzw. puzzolanisches Bindemittel wie z. B. Flugasche, Metakaolin, Silicastaub und Hüttensand handeln. Besonders bevorzugt sind Zement auf Basis Portlandzement, Calciumsulfat Halbhydrat, Calciumsulfat Anhydrit und Calciumaluminatzement. Bei den anorganischen Füllstoff kann es sich bevorzugt um mindestens einen aus der Reihe Quarzsand, Quarzmehl, Kalkstein, Schwerspat, Calcit, Dolomit, Talkum, Kaolin, Glimmer und Kreide handeln.

In einer besonders bevorzugten Ausführungsform handelt es sich bei der pulverförmigen Mischung um einen Werktrockenmörtel, insbesondere um Mauermörtel, Putzmörtel, Mörtel für Wärmedämmverbundsysteme, Sanierputze, Fugenmörtel, Fliesenkleber, Dünnbettmörtel, Estrichmörtel, Vergussmörtel, Einpressmörtel, Spachtelmassen, Dichtschlämmen oder Auskleidungsmörtel. Der Werktrockenmörtel kann hierbei direkt mit der erfindungsgemäßen Zusammensetzung in Kontakt gebracht werden, was insbesondre durch Aufsprühen oder Bedüsen geschehen kann. Es ist aber auch möglich zunächst das anorganische Bindemittel mit der erfindungsgemäßen Zusammensetzung in Kontakt zu bringen und die anderen Komponenten, insbesondere anorganische Füllstoffe und Additive in einem nachfolgenden Schritt beizumischen.
In einer besonders bevorzugten Ausführungsform wird zunächst der anorganische Füllstoff mit der erfindungsgemäßen Zusammensetzung in Kontakt gebracht und die anderen Komponenten, insbesondere anorganische Bindemittel und Additive in einem nachfolgenden Schritt beigemischt. In diesem Fall kann die pulverförmige Mischung, bestehend aus anorganischem Füllstoff und der erfindungsgemäßen Zusammensetzung, bevorzugt bis zu 90 Gew.-% der erfindungsgemäßen Zusammensetzung, bezogen auf die Gesamtmasse der pulverförmigen Mischung, umfassen.

Das ständige Streben nach weitgehender Rationalisierung sowie verbesserter Produktqualität hat dazu geführt, dass im Baubereich Mörtel für die verschiedensten Einsatzbereiche heute praktisch nicht mehr auf der Baustelle selbst aus den Ausgangsstoffen zusammengemischt wird. Diese Aufgabe wird heute weitgehend von der Baustoffindustrie werksseitig übernommen und die gebrauchsfertigen Mischungen als sogenannte Werktrockenmörtel zur Verfügung gestellt. Dabei werden fertige Gemische, die auf der Baustelle ausschließlich durch Zugabe von Wasser und Durchmischen verarbeitbar gemacht werden, gemäß DIN 18557 als Werkmörtel, insbesondere als Werktrockenmörtel bezeichnet. Derartige Mörtelsysteme können die verschiedensten bauphysikalischen Aufgaben erfüllen. Je nach gestellter Aufgabe werden dem Bindemittel, welches bspw. Zement und/oder Kalk und/oder Calciumsulfat enthalten kann, weitere Additive bzw. Zusatzmittel beigemengt, um den Werktrockenmörtel an den speziellen Einsatzzweck anzupassen. Hierbei kann es sich bspw. um Schwundreduzierer, Expansionsmittel, Beschleuniger, Verzögerer, Dispergiermittel, Verdicker, Entschäumer, Luftporenbildner, Korrosionsinhibitoren handeln.

In einer besonderen Ausführungsform kann es sich bei dem erfindungsgemäßen Werktrockenmörtel auch um eine selbstnivellierende Verlaufsmasse handeln. Dies ist besonders vorteilhaft, da solche pulverförmigen Zusammensetzungen für geringe Schichtdicken in der Regel sehr fein sind und sich daher vergleichsweise langsam mit Wasser anmischen lassen.

Bei dem anorganischen Bindemittel kann es sich weiterhin um Gips handeln. Der Ausdruck "Gips" wird im vorliegenden Zusammenhang synonym mit Calciumsulfat verwendet, wobei das Calciumsulfat in seinen unterschiedlichen wasserfreien und hydratisierten Formen mit und ohne Kristallwasser vorliegen kann. Natürlicher Gips umfasst im Wesentlichen Calciumsulfat-Dihydrat ("Dihydrat"). Die natürliche kristallwasserfreie Form von Calciumsulfat ist vom Ausdruck "Anhydrit" umfasst. Neben den natürlichen Erscheinungsformen stellt Calciumsulfat ein typisches Nebenprodukt technischer Prozesse dar, worunter dann "synthetischer Gips" verstanden wird. Ein typisches Beispiel für einen synthetischen Gips aus technischen Prozessen ist die Abgasentschwefelung. Synthetischer Gips kann aber auch gleichermaßen das Nebenprodukt von Phosphorsäure- oder Flusssäure-Herstellungsverfahren entstehen. Typischer Gips (CaSO₄ x 2 H₂O) kann calziniert werden, indem das Kristallwasser abgetrennt wird. Produkte der unterschiedlichsten Calzinierungsverfahren sind α- oder β-Halbhydrat. β-Halbhydrat resultiert aus einer raschen Erhitzung in offenen Gefäßen, bei einer gleichzeitig schnellen Verdampfung von Wasser unter Bildung von Hohlräumen. α-Halbhydrat wird hergestellt durch die Entwässerung von Gips in geschlossen Autoklaven. Die Kristallform in diesem Fall ist relativ dicht, weshalb dieses Bindemittel weniger Wasser zur Verflüssigung benötigt als β-Halbhydrat. Auf der anderen Seite rehydriert Halbhydrat mit Wasser zu Dihydrat-Kristallen. Üblicherweise ist für die Hydratation von Gips ein Zeitbedarf von einigen Minuten bis Stunden notwendig, woraus eine verkürzte Verarbeitungszeit im Vergleich zu Zementen resultiert, die zur vollständigen Hydratation mehrere Stunden bis Tage benötigen. Diese Eigenschaften machen Gips zu einer brauchbaren Alternative zu Zementen als Bindemittel in den verschiedensten Anwendungsgebieten. Außerdem zeigen ausgehärtete Gipsprodukte eine ausgeprägte Härte und Druckfestigkeit.

Für die unterschiedlichsten Anwendungsgebiete wird β-Halbhydrat ausgewählt, weil dieser besser verfügbar ist und unter wirtschaftlichen Gesichtspunkten zahlreiche Vorteile zeigt. Allerdings werden diese Vorteile dadurch zum Teil wieder aufgehoben, dass β-Halbhydrat bei der Verarbeitung einen höheren Wasserbedarf hat, um überhaupt fließfähige Suspensionen zu erzielen. Zudem neigen die hieraus hergestellten getrockneten Gipsprodukte zu einer gewissen Schwäche, welche auf Restwassermengen zurückzuführen sind, die in der Kristallmatrix beim Aushärten verblieben sind. Aus diesem Grund zeigen entsprechende Produkte eine geringere Härte als Gipsprodukte, die mit geringeren Mengen an Anmachwasser zubereitet worden sind.

Besonders bevorzugt handelt es sich deshalb im Sinne der vorliegenden Erfindung bei Gips um β-Calciumsulfathalbhydrat. Erfindungsgemäßes β-Calciumsulfathalbhydrat ist hierbei insbesondere zur Verwendung in gipsbasierten Fließestrich geeignet.
Eine Formulierung von gipsbasierten Fließestrichen ist bislang nur mit Bindemitteln auf Basis von Anhydrit oder α-Halbhydrat möglich. Bei dieser Art von Bindemitteln handelt es sich um Modifikationen des Gipses, die einen sehr niedrigen Wasseranspruch aufweisen und damit hochfeste Binder sind. Allerdings weisen beide Komponenten sowohl preislich als auch in ihrer Verfügbarkeit deutliche Nachteile gegenüber β-Halbhydrat auf. Die Verwendung von β-Halbhydrat dagegen ist nach dem Stand der Technik nicht möglich, da aufgrund des hohen Wasseranspruchs die daraus resultierenden Festigkeiten zu gering sind, um einen Fließestrich in ausreichender Qualität zu produzieren. Es hat sich gezeigt, dass Fließmittel auf Basis von Ligninsulfonat, Melaminsulfonat und Polynaphthalinsulfonat nicht in der Lage sind den Wasseranspruch von β-Halbhydrat ausreichend zu reduzieren.
Der Einsatz von Polycarboxylatethern ermöglicht eine ausreichende Wasserreduktion, allerdings ist die Entfaltungsgeschwindigkeit von Polycarboxylatethern, die dem Stand der Technik entsprechen, zu gering für maschinenapplizierte Fließestriche.
Bei der Verarbeitung einer derartigen Estrichmischung mit einer Maschine kommt es zu Beginn zu einem starken Viskositätsaufbau, so dass die Mischung entweder nicht homogen zu verarbeiten ist oder aber der Verarbeiter auf der Baustelle die Viskosität mit der Zugabe von Wasser ausgleicht, wodurch es zu Separation der Masse kommt. Darüber hinaus führt das überschüssige, später verdunstende Wasser zu einer signifikant verschlechterten mechanischen Festigkeit, Beständigkeit und Dauerhaftigkeit. Maschinenapplizierte gipsbasierte Fließestriche auf Basis von erfindungsgemäßem β-Calciumsulfathalbhydrat lassen sich hingegen wie die im Stand der Technik bekannten gipsbasierten Fließestriche auf Basis von Anhydrit oder α-Halbhydrat verarbeiten und weisen eine vergleichbare oder sogar bessere mechanische Festigkeit, Beständigkeit und Dauerhaftigkeit auf.

Die erfindungsgemäße pulverförmige Mischung, welche die erfindungsgemäße Zusammensetzung umfasst, kann insbesondere auch ein Bindemittelgemisch umfassen. Darunter werden im vorliegenden Zusammenhang Gemische aus mindestens zwei Bindemitteln aus der Reihe Zement, puzzolanisches und/oder latent hydraulisches Bindemittel, Weißzement, Spezialzement, Calciumaluminatzement, Calciumsulfoaluminatzement und die verschiedenen wasserhaltigen und wasserfreien Calciumsulfate verstanden. Diese können dann ggf. noch weitere Additive enthalten.

Die pulverförmige Mischung sollte im Rahmen der vorliegenden Erfindung vorzugsweise in trockener Form vorliegen, wobei hierunter zu verstehen ist, dass diese einen Wassergehalt nach Karl-Fischer von weniger als 5 Gew.-%, vorzugsweise weniger als 1 Gew.-% und besonders bevorzugt von weniger als 0,1 Gew.-% aufweist.

Es ist bevorzugt, wenn das Pulver eine mittlere Teilchengröße zwischen 0,1 und 1000 µm, besonders bevorzugt zwischen 1 und 200 µm aufweist. Die Teilchengröße wird hierbei durch Laserdiffraktometrie bestimmt.

Bevorzugt enthält die erfindungsgemäße pulverförmige Mischung, umfassend die erfindungsgemäße Zusammensetzung, zwischen 2 und 99,9 Gew.-%, insbesondere zwischen 8 und 50 Gew.-% und besonders bevorzugt zwischen 10 und 40 Gew.-% eines anorganischen Bindemittels.

Die nachfolgenden Beispiele sollen die Erfindung näher erläutern.

### Beispiele

### Gelpermeationschromatographie

Die Probenpräparation für die Molgewichtsbestimmung erfolgte durch Lösen von Copolymerlösung im GPC Eluent, so dass die Polymerkonzentration im GPC-Eluent 0,5 Gew.-% beträgt. Danach wurde diese Lösung über einen Spritzenvorsatzfilter mit Polyethersulfonmembran und Porengröße 0.45 µm filtriert. Das Injektionsvolumen dieses Filtrats betrug 50 - 100 µl.
Die Bestimmung der mittleren Molekulargewichte erfolgte auf einem GPC Gerät der Firma Waters mit dem Typnamen Alliance 2690 mit UV-Detektor (Waters 2487) und RI-Detektor (Waters 2410).

| | |
|---|---|
| Säulen: | Shodex SB-G Guard Column for SB-800 HQ series |
| | Shodex OHpak SB 804HQ and 802.5HQ |
| | (PHM gel, 8 x 300 mm, pH 4,0 bis 7,5) |
| Eluent: | 0,05 M wässrige Ammoniumformiat / Methanol-Mischung = 80:20 (Volumenteile) |
| Flußrate: | 0,5 ml/min |
| Temperatur: | 50° C |
| Injektion: | 50 bis 100 µl |
| Detektion: | RI und UV |

Die Molekulargewichte der Copolymere wurden relativ zu Polyethylenglykol Standards der Firma PSS Polymer Standards Service GmbH bestimmt. Die Molekulargewichtsverteilungskurven der Polyethylenglykolstandards wurden mittels Lichtstreuung bestimmt. Die Massen der Polyethylenglykolstandards betrugen 682 000, 164 000, 114 000, 57 100, 40 000, 26 100, 22 100, 12 300, 6 240, 3 120, 2 010, 970, 430, 194, 106 g/mol.

### Zusammensetzung der Copolymere

Die Synthese des verwendeten Copolymeren ist zum Beispiel in WO2006133933 Seite 12, Zeile 5 bis Seite 13, Zeile 26 beschrieben. Das verwendete Copolymer hat folgende Zusammensetzung:

**Tabelle 1**

| Copolymer | Mol Acrylsäure | Mol Makromonomer | Makromonomer | Mw (g/mol) | Feststoff % |
|---|---|---|---|---|---|
| A | 5 | 1 | VOBPEG-3000 | 32.000 | 51 |

Die Abkürzung VOBPEG-3000 steht für Vinyl-oxy-butyl-polyethylenglykol mit einer molaren Masse von 3000 g/mol, d.h. gemäß Formel (III) k=0, l=0 und n-68.

### Allgemeines Herstellbeispiel für Copolymere in Weißöl (erfindungsgemäß)

In einem 5 Liter Gefäß werden 400 g Weißöl (ADDINOL WX 32) vorgelegt.
Dazu werden 32 g des Emulgators Rhodibloc RS (Dispersion von amphiphilen DiblockCopolymeren mit einem hydrophilen und einem hydrophoben Block) zugegeben. Die Mischung wird mittels eines Flügelrührer vermischt. Hierzu werden unter Rühren 800 g einer 50 Gew.-%igen wässrigen Lösung des Copolymers (siehe Tabelle 1) in etwa 1 Minute dosiert.
Diese Mischung wird dann 30 Minuten bei etwa 800 Umdrehungen/Minute (rpm) mittels des Flügelrührers gemischt. Danach wird für 5 Minuten ein Ultra Turrax mit 24.000 Umdrehungen/Minute (rpm) dazugeschaltet. Die entstandene weiße Emulsion wird in einen 2 Liter Kolben gegeben. Am Rotationsverdampfer wird dann langsam, ohne Aufkochen, das Wasser bei 70°C abgezogen, wobei der Druck während der Verdampfung von 400 mbar langsam auf 40 mbar gesenkt wird. Die erhaltenen Produkte haben einen Wassergehalt von 2 Gew.-%.

**Tabelle 2**

| Beispiel | Copolymer | Menge an Copolymer | Weißöl | Emulgator | Flügelrührer | Ultra Turrax |
|---|---|---|---|---|---|---|
| 1 | A | 800 g 50%ige Lsg. | 400 g | 32 g Rhodibloc RS | 30 min bei 800 rpm | 5 min bei 24000 rpm |

### Anwendungsbeispiele

### Pulverförmige Mischung (Selbstverlaufende Spachtelmasse (SLU))

**Tabelle 3**

| | Hersteller | Gewichtsteile |
|---|---|---|
| Portlandzement (Milke CEM I 52,5N) | Heidelberg Cement AG | 30,00 |
| Calciumaluminatzement (Fondu Ciment) | Kerneos Inc | 10,00 |
| Calciumsulfatbinder CAB 30 | Lanxess AG | 6,00 |
| Calciumcarbonat (Omyacarb 6AL) | Omya GmbH | 10,00 |
| Calciumcarbonat (OMYACARB 15AL) | Omya GmbH | 15,00 |
| Calciumcarbonat (Omyacarb 130AL) | Omya GmbH | 26,38 |
| Lithiumcarbonat | Chemmetall GmbH | 0,10 |
| Entschäumer (Vinapor DF 9010 F) | BASF Construction Polymers GmbH | 0,15 |
| Dispersionspulver (Vinnapas 5023L) | Wacker AG | 2,00 |
| Weinsäure | DU Chemie GmbH | 0,12 |

Die pulverförmige Mischung wird hergestellt, indem die verschiedenen Komponenten (siehe Tabelle 3) 10 Minuten lang in einem SK450 Rüttler (Firma Fast&Fluid Management B.V.) homogenisiert werden.

Jeweils 300 g der pulverförmigen Mischung wird mit 0,25 Gew-% Copolymer A, bezogen auf die pulverförmige Mischung, in unterschiedlicher Weise beaufschlagt (siehe Tabelle 4a).

Erfindungsgemäß erfolgt die Zugabe des Copolymers A in Form einer Weißöl-Emulsion auf die pulverförmige Zubereitung (siehe Protokoll D in Tabelle 4a und Beispiel 2 in Tabelle 4b). Die pulverförmige Mischung wird hierbei mit der Emulsion des Copolymers A (siehe Beispiel 1 in Tabelle 2) in Weißöl bei 8000 rpm Scherenergie in einem Grindomix GM 200 (Retsch GmbH) vermischt.

Als Vergleichsbeispiel V1 wird die pulverförmige Mischung mit dem pulverförmigen Copolymers A versetzt, anschließend wird Anmachwasser zugegeben (Protokoll A, Tabelle 4a). In Vergleichsbeispiel V2 wird die pulverförmige Mischung separat mit Weißöl und Polymerpulver vermischt bei 8000 rpm (Protokoll B, Tabelle 4a), anschließend wird das Anmachwasser hinzugegeben. In Vergleichsbeispiel 3 wird zur pulverförmigen Mischung das Anmachwasser gegeben, welches vorher mit der Weißöl / Polymer Emulsion versetzt wurde (Protokoll C, Tabelle 4a).

Zur Begutachtung der zeitlichen Entfaltung der dispergierenden Wirkung des Copolymers A nach Zugabe des Anmachwassers wird die pulverförmige Mischung in ein Becherglas gegeben und mit einem Axialrührer bei 500 Umdrehungen pro Minute gerührt. Dann erfolgt die Zugabe des Anmachwassers (63 g Wasser entspricht 21 Gew.-% bezogen auf das Gewicht der pulverförmigen Mischung) und es wird die Zeit gemessen, nach der visuell eine homogene Konsistenz des Frischmörtels resultiert (siehe Tabelle 4b).

**Tabelle 4a: Mischprotokolle**

| Protokoll | Flüssige Phase | Feste Phase |
|---|---|---|
| A | Anmachwasser | Mit Polymer A Pulver gemischte SLU Formulierung |
| B | Anmachwasser | Weißöl auf SLU Formulierung beaufschlagt bei 8000 rpm Scherrate, anschließend Polymer A damit gemischt |
| C | Anmachwasser + Weißöl / Polymer A Emulsion | Unbehandelte SLU Formulierung |
| D | Anmachwasser | SLU Formulierung mit einer Weißöl / Polymer A Emulsion 50% bei 8000 rpm vermischt |

**Tabelle 4b: Anmischgeschwindigkeit bei Zugabe der Polymer-Weißöl Emulsionen**

| Beispiel | V1 | V2 | V3 | 2 |
|---|---|---|---|---|
| | | | | |
| Protokoll | A | B | C | D |
| Scherrate [rpm] | | 8000 | | 8000 |
| Pulverförmige Mischung nach Tabelle 2 | 299,25 | 298,5 | 298,5 | 298,5 |
| Polymer A Pulver [g] | 0,75 | 0,75 | | |
| Weißöl [g] | | 0,75 | | |
| Emulsion gem. Beispiel 1 [g] | | | 1,5 | 1,5 |
| H₂O [g] | 60 | 60 | 60 | 60 |
| Zeit bis Mischung homogen [s] | 15 | 12 | 21 | 6 |

Tabelle 4b zeigt, dass die pulverförmige Mischung, welche vor Zugabe des Anmachwassers mit einer erfindungsgemäßen Emulsion des Copolymers A in Weißöl behandelt wurde (Beispiel 2) eine deutlich schnellere zeitlichen Entfaltung der dispergierenden Wirkung des Copolymers A nach Zugabe des Anmachwassers zeigen, als bei den Beispielen V1 bis V3.

### Beaufschlagung von Kalksteinmehl mit der erfindungsgemäßen Emulsion des Copolymers A in Weißöl

### Beispiel 3:

15 g Kalksteinmehl (Omyacarb 20 BG) und 1,5 g einer 50%igen Emulsion des Copolymers A in Weißöl (siehe Beispiel 1 in Tabelle 2) werden in einem Grindomix GM 200 (Retsch GmbH) mit einer Scherrate von 5000 Umdrehungen pro Minute für 5 Minuten homogenisiert. Dabei fällt ein leicht rieselfähiges mit Copolymer beschichtetes Kalksteinmehl an.

### Beispiel 4:

Das so behandelte Kalksteinmehl wird mit 285 g der pulverförmigen Mischung nach Tabelle 3 gemischt. Dazu wird die entsprechende Menge des behandelten Kalksteinmehls (siehe Tabelle 5) mit der pulverförmigen Mischung für 1 Minute im SK450 Rüttler homogenisiert. Das Beispiel 4 zeigt eine sehr schnelle Entfaltung der dispergierenden Wirkung des Copolymers A nach Zugabe des Anmachwassers, wobei eine Homogenisierung nach 7s erreicht wird.
Das entsprechende Anwendungsbeispiel V4 (Vergleichsbeispiel), in welchem das pulverförmige Copolymer A zusammen mit Kalksteinmehl und Weißöl separat mit der pulverförmige Mischung nach Tabelle 3 vermischt wird, benötigt hingegen 10 Sekunden bis zur Homogenisierung.

**Tabelle 5:**

| Anwendungsbeispiel | Beispiel V4 | Beispiel 4 |
|---|---|---|
| | Menge in Gramm | Menge in Gramm |
| Pulverförmige Mischung nach Tabelle 2 | 285 | 285 |
| Copolymer A | 0,75 | |
| Beschichtetes Kalksteinmehl aus Beispiel 3 | | 15 |
| Weißöl im Anmachwasser | 0,75 | |
| Omyacarb 20 BG | 13,5 | |
| Wasser | 57 | 57 |
| Zeit bis Mischung homogen [s] | 10 | 7 |

## Patentansprüche

1. Zusammensetzung umfassend
| | |
|---|---|
| 1 bis 70 Gew.-% | mindestens eines Copolymers, welches erhältlich ist durch Polymerisation einer Mischung von Monomeren, umfassend |
| (I) | mindestens ein ethylenisch ungesättigtes Monomer, welches mindestens einen Rest aus der Reihe Carbonsäure, Carbonsäuresalz, Carbonsäureester, Carbonsäureamid, Carbonsäureanhydrid und Carbonsäureimid umfasst und |
| (II) | mindestens ein ethylenisch ungesättigtes Monomer mit einem Polyalkylenoxid-Rest, |
| 0,01 bis 10 Gew.-% | mindestens eines Emulgators und |
| 29 bis 98 Gew.-% | mindestens eines bei 20 °C flüssigen Kohlenwasserstoffs oder eines Kohlenwasserstoffgemischs. |

2. Zusammensetzung nach Anspruch 1, **dadurch gekennzeichnet, dass** es sich bei dem mindestens einen bei 20 °C flüssigen Kohlenwasserstoff oder Kohlenwasserstoffgemisch um mindestens einen aliphatischen Kohlenwasserstoff oder ein Kohlenwasserstoffgemisch handelt.

3. Zusammensetzung nach einem der Ansprüche 1 bis 2, **dadurch gekennzeichnet, dass** die eingesetzten Kohlenwasserstoffe oder Kohlenwasserstoffgemische eine kinematische Viskosität (ISO 3014 bzw. DIN 51 562/T1) bei 20 °C im Bereich von 30 bis 150 mm²/s besitzen.

4. Zusammensetzung nach einem der Ansprüche 1 bis 3, **dadurch gekennzeichnet, dass** das ethylenisch ungesättigte Monomer (I) durch mindestens eine der folgenden allgemeinen Formeln aus der Gruppe (Ia), (Ib) und (Ic) repräsentiert wird 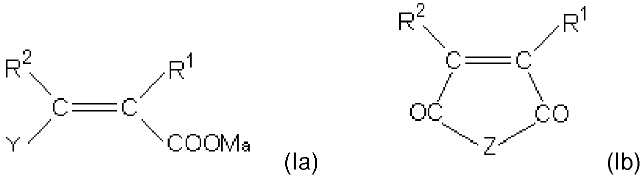 wobei
R¹ und R² unabhängig voneinander für Wasserstoff oder einen aliphatischen Kohlenwasserstoffrest mit 1 bis 20 C-Atomen
Y für H, -COOMₐ, -CO-O(C_{q}H_{2q}O)ᵣ-R³, -CO-NH-(C_{q}H_{2q}O)ᵣ-R³
M für Wasserstoff, ein ein- oder zweiwertiges Metallkation, Ammoniumion oder einen organischen Aminrest
a für ½ oder 1
R³ für Wasserstoff, einen aliphatischen Kohlenwasserstoffrest mit 1 bis 20 C-Atomen, einen cycloaliphatischen Kohlenwasserstoffrest mit 5 bis 8 C-Atomen, einen ggf. substituierten Arylrest mit 6 bis 14 C-Atomen
q unabhängig voneinander für jede (C_{q}H_{2q}O)-Einheit gleich oder verschieden 2, 3 oder 4 und
r für 0 bis 200
Z für O, NR³
stehen, 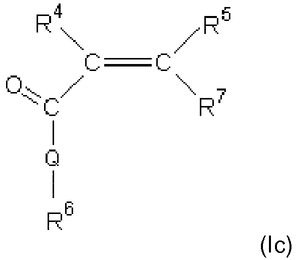 mit
R⁴ und R⁵ unabhängig voneinander für Wasserstoff oder einen aliphatischen Kohlenwasserstoffrest mit 1 bis 20 C-Atomen, einen cycloaliphatischen Kohlenwasserstoffrest mit 5 bis 8 C-Atomen, einen ggf. substituierten Arylrest mit 6 bis 14 C-Atomen
Q gleich oder verschieden sowie repräsentiert durch NH, NR³ oder O; wobei R³ die oben genannte Bedeutung besitzt
R⁶ gleich oder verschieden sowie repräsentiert durch (CₙH₂ₙ)-SO₃H mit n = 0, 1, 2, 3 oder 4, (CₙH₂ₙ)-OH mit n = 0, 1, 2, 3 oder 4; (CₙH₂ₙ)-PO₃H₂ mit n = 0, 1, 2, 3 oder 4, (CₙH₂ₙ)-OPO₃H₂ mit n= 0, 1, 2, 3 oder 4, (C₆H₄)-SO₃H, (C₆H₄)-PO₃H₂, (C₆H₄)-OPO₃H₂ und (CₙH₂ₙ)-NR⁸_{b} mit n = 0, 1, 2, 3 oder 4 und b = 2 oder 3
R⁷ für H, -COOMₐ, -CO-O(C_{q}H_{2q}O)ᵣ-R³, -CO-NH-(C_{q}H_{2q}O)ᵣ-R³, wobei Mₐ, R³, q und r oben genannte Bedeutungen besitzen
R⁸ für Wasserstoff, einen aliphatischen Kohlenwasserstoffrest mit 1 bis 10 C-Atomen, einen cycloaliphatischen Kohlenwasserstoffrest mit 5 bis 8 C-Atomen, ein ggf. substituierter Arylrest mit 6 bis 14 C-Atomen.

5. Zusammensetzung nach einem der Ansprüche 1 bis 4, **dadurch gekennzeichnet, dass** das ethylenisch ungesättigte Monomer (II) durch folgende allgemeine Formeln repräsentiert wird 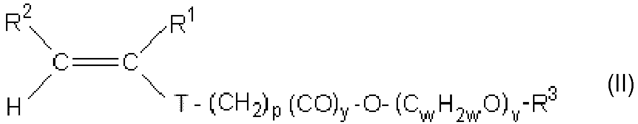 worin
p für eine ganze Zahl zwischen 0 und 6
y für 0 oder 1
v für eine ganze Zahl zwischen 3 und 250
w unabhängig voneinander für jede (C_{w}H_{2w}O)-Einheit gleich oder verschieden für eine ganze Zahl zwischen 2 und 18,
T für Sauerstoff oder eine chemische Bindung,
wobei R¹, R² und R³ die oben genannte Bedeutung besitzen stehen.

6. Zusammensetzung nach einem der Ansprüche 1 bis 5, **dadurch gekennzeichnet, dass** der Anteil des Monomeren (I) an dem Copolymer 5 bis 90 Mol-% und der Anteil des Monomeren (II) an dem Copolymer 10 bis 95 Mol-% beträgt.

7. Zusammensetzung nach einem der Ansprüche 1 bis 6, **dadurch gekennzeichnet, dass** es sich bei dem Emulgator um mindestens einen für Emulsionspolymerisationen geeigneten Emulgator handelt.

8. Zusammensetzung nach einem der Ansprüche 1 bis 7, **dadurch gekennzeichnet, dass** es sich bei dem Emulgator um eine Dispersion auf Basis von Copolymeren handelt.

9. Verfahren zur Herstellung einer Zusammensetzung nach einem der Ansprüche 1 bis 8, **dadurch gekennzeichnet, dass** die Polymerisation der Monomeren (I) und (II) in einem wasserhaltigen Lösungsmittel durchgeführt wird, wobei der Wassergehalt der gesamten Reaktionsmischung mehr als 20 Gew.-% beträgt, das Polymerisationsprodukt mit dem Emulgator und dem mindestens einen bei 20 °C flüssigen Kohlenwasserstoff oder Kohlenwasserstoffgemisch versetzt und das Wasser entfernt wird.

10. Verfahren nach Anspruch 9, **dadurch gekennzeichnet, dass** in die Zusammensetzung vor dem Entfernen des Wassers mehr als 10³ W/m³ Scherleistung eingetragen werden.

11. Verfahren nach Anspruch 10, **dadurch gekennzeichnet, dass** die Scherenergie mit mindestens einer Vorrichtung aus der Reihe Zahnkolloidmühle, Perlmühle, Ultraschall-Geräte, Rotor-Stator und Dissolver-Scheibe eingetragen wird.

12. Pulverförmige Mischung umfassend eine Zusammensetzung nach einem der Ansprüche 1 bis 8.

13. Pulverförmige Mischung, **dadurch gekennzeichnet, dass** diese 0,01 bis 90 Gew.-% der Zusammensetzung nach einem der Ansprüche 1 bis 8, bezogen auf die Gesamtmasse, umfasst.

14. Verwendung einer Zusammensetzung nach einem der Ansprüche 1 bis 8 in einer pulverförmigen Mischung, zur Beschleunigung der zeitlichen Entfaltung der dispergierenden Wirkung des Copolymers nach Zugabe des Anmachwassers, wobei 0,01 bis 10 Gew.-% der Zusammensetzung, bezogen auf die Gesamtmasse, eingesetzt werden.

15. Verwendung nach Anspruch 14, **dadurch gekennzeichnet, dass** die pulverförmige Mischung ein anorganisches Bindemittel und/oder einen anorganischen Füllstoff umfasst.
